# EUROPEAN PATENT SPECIFICATION

(11) **EP 3 789 268 B1**
(45) Date of publication and mention of the grant of the patent: **23.03.2022**
(21) Application number: 20194264.6
(22) Date of filing: 03.09.2020
(51) Int. Cl.: B62B 3/06, B66F 17/00, B62B 3/00, B62B 5/00, B62D 51/00, B62D 51/04, B66F 9/22, B66F 9/24, B60K 28/14, B60P 1/44

(54) **AN INDUSTRIAL TRUCK**
FLURFÖRDERZEUG
CHARIOT DE MANUTENTION

(30) Priority: 03.09.2019 SE 1951005
(43) Date of publication of application: 10.03.2021
(73) Proprietor: Toyota Material Handling Manufacturing Sweden AB, 595 81 Mjölby (SE)
(72) Inventor: CARLSON, Magnus, 590 47 Vikingstad (SE); OLSSON, Lars-Eric, 591 72 Motala (SE); BRUNMAN, Per, 589 51 Linköping (SE); HOLMSTRÖM, Simon, 615 75 Ringarum (SE)
(74) Representative: Zacco Sweden AB

(56) References cited:
- EP-A1- 1 700 778
- EP-A1- 2 172 414
- WO-A1-2011/129692
- CN-A- 109 607 423
- CN-U- 207 292 083
- US-A1- 2006 231 302

## Description

### FIELD OF THE INVENTION

The present invention relates to an industrial truck. More specifically, the invention relates to an industrial truck as defined in the annexed claims The invention is likewise related to a method for operating an industrial truck according to annexed claims.

### BACKGROUND ART

Industrial trucks are used for material handling operations. In general, they involve moving a load by means of a load carrier and a pallet. The load carrier can be a pair of forks, but can be of other types that allows for transporting a particular type of load. Not seldom, the industrial trucks are used for order picking operations where the operator uses a tiller arm for operating the industrial truck walking beside the vehicle. The tiller arm is used both for steering and for controlling lift and lowering of the load carrier, by means of buttons on the tiller arm. It is known to use sensors on industrial trucks in order to augment security of the operation. For example, it is known to have a sensor on a standing platform from which the industrial truck is operated. It has been identified that as the load is lifted in a lowering operation the feet of the operator might be squeezed between the load carrier and the floor. Examples are disclosed in documents : EP2172414, EP1700778, US2006231302, CN109607423, CN207292083U and WO2011129692.

### SUMMARY

However, it has come to the attention that it is difficult to add a sensor for preventing that a foot is squeezed between the load carrier and the floor. Thus, it is an object of the present invention to mitigate, alleviate or eliminate one or more of the above-identified deficiencies and disadvantages in the prior art and solve at least the above-mentioned problem. According to the invention there is provided an industrial truck comprising, a tiller arm for maneuvering the industrial truck, a load carrier, an horizontal pivot angle sensor, a control unit, an hydraulic system for operating the load carrier, wherein the control unit operable to control functions of the industrial truck including travel and lifting function, wherein the angle sensor is operable to detect the pivot angle of the tiller arm around a vertical axis, wherein the load carrier is operable to be maneuvered to an elevated position, characterized in that, the industrial truck is arranged such that the angle sensor can send detected pivot angle values to the control unit, wherein the industrial truck is arranged such that control unit is operable to communicate with and control the hydraulic system of the industrial truck, wherein the control unit is arranged such that when the pivot angle of the tiller arm is determined by the sensor to be within a first predetermined range of pivot angles, the control unit controls the hydraulic system such that lowering of load carrier is disabled.

The advantages of the above solution is several. It has been determined that the squeezing risk is the highest at large pivot angles of the tiller arm. The reason being that the operator is actually residing on the side of the industrial vehicle. In particular in narrow areas. It has further been identified that also the housing of the industrial truck is moving up and down with the load carrier. This problem is also solved with the present invention, despite the lack of sensors etc. In addition, there is a problem with the load itself. There might be a problem of squeezing from the load to the drivers feet as well. This is particularly difficult to address, as in fact it is quite cumbersome and difficult to add a sensor to each load for preventing it to be lowered onto a foot.

A predetermined range for disabling the lowering of the load carrier for the pivot angle may be 45 ° to the maximal pivot angle on both sides of the 0 ° pivot angle, preferably the maximal pivot angle may be 100 °, even more preferred it may be 95 °, or even more preferred it may be 90 °.

It is important to understand that at the outer end of the pivot range is the risk of squeezing the highest. Thus, it must be understood that pivoting angles above 100 ° or more would give very high risk of squeezing, thus the present invention would be even more effective for those cases.

The predetermined range for disabling the lowering of the load carrier may be 60 to 90 ° on both sides from 0 ° pivot angle.

By narrowing down the range of pivoting angles on both sides of the industrial vehicle the operation of material handling can be optimized as the operators is not as disturbed in his work, and thus can put down a load more easily than if the pivot angle that allows for lowering would be very narrow.

The control of the hydraulic system to disable lowering of the load carrier, may be made through blocking of a valve comprised between a hydraulic lifting cylinder and a hydraulic tank.

By making an electronic blocking, the modification of an existing industrial truck is made simple. In addition, it provides a safe and reliable solution to block the return flow of hydraulic liquid. Complex mechanical locking mechanisms can be avoided. The solution is easy to control and check.

The industrial truck may have a housing that is movable in the vertical direction with the load carrier, or there is a section of the housing that is movable in the vertical direction.

With an industrial truck that is designed with a housing that moves up and down with the load carrier, there is a particular advantage to prevent squeezing of the feet of the operator. An operator is often focused on the load carrier or the load when walking at the side of the industrial truck and might forget that also a section of the housing can be movable.

The industrial truck may be arranged such that the complete operation of the hydraulic system is disabled in a second predetermined range for horizontal pivot angles of the tiller arm, this is preferably arranged by arranging the control unit such that it can block the operation of the hydraulic pump of the hydraulic system.

By preventing both lowering and lifting, the industrial truck is made even more safe than by only blocking lowering. An operator will need to move the tiller arm away from the second predetermined range of horizontal pivot angles in order to be able to operate lifting and lowering of the industrial truck.

The industrial truck may comprise a horizontal angle detector that is positioned in the handle of the tiller arm, preferably said angle detector may comprise an accelerometer or a gyro.

The advantage of using accelerometers or gyros is that they are very robust and can be positioned close to a control unit in the handle.

The industrial truck may be arranged such that lowering of the load carrier is prevented at a predetermined distance from the floor on which the industrial truck is operable, preferably the industrial truck may be arranged such that lowering is allowed for above the predetermined distance from the floor.

The advantage of the above is that the operation of the industrial truck is simplified. The operator need not take particular action in situations when there is no risk for his feet to get squeezed. Thus the operator can be allowed to lower the load carrier at higher levels when the feet is not near the moving parts of the load carrier and/or the housing of the industrial truck.

Further, there is according to one aspect disclosed a method for operating an industrial truck:
- detect a pivot angle of a tiller arm of the industrial truck,
- compare the detected pivot angle with a first predetermined range of pivot angles,
- determine that the detected pivot angle falls within the first predetermined range of pivot angles, disable the lowering of a load carrier of the industrial truck.

The advantage is that a safe and very reliable method is achieved for preventing that an operator is squeezed between, load carrier, truck housing, and/or load.

The method may further comprise the following steps in the method:
- determine that the detected pivot angle falls within a second predetermined range of horizontal pivot angles,
- disable lifting of the load carrier if the detected pivot angle falls within the second predetermined range of horizontal pivot angles.

Thus, a much more secure operation of the industrial truck can be achieved preventing movement in vertical direction.

The method may further comprise the steps of
- detect the distance between the load carrier or housing of the truck to the floor,
- override the step of disabling of lowering of the load carrier if the detected distance is over a predetermined value.

Thus, a much more smooth operation of the industrial truck is achieved, as the operator is not unnecessarily blocked from lowering a load when the risk of squeezing the feet is not at hand.

The disclosure also involves a computer software, that when it is stored on a control unit of the industrial truck of any of the above, performs the method according to the above.

The disclosure also involves a computer program product comprising the computer software of the above stored on a computer readable medium.

Thus, an industrial truck having all hardware can be modified to perform the method above by installing the disclosed software from the computer readable medium.

The present invention will become apparent from the detailed description given below. The detailed description and specific examples disclose preferred embodiments of the invention by way of illustration only. Those skilled in the art understand from guidance in the detailed description that changes and modifications may be made within the scope of the invention.

### TERMINOLOGY

The term industrial truck is to be understood as being a material handling vehicle. That is in general a vehicle having a hydraulic system and two forks for lifting pallets. However as the invention is related to the hydraulic system, forks is not necessary the load carrier, there can be other elements performing the lift operation.

The term truck should not be construed as a lorry or an industrial vehicle capable of performing long distance transports on public roads at speeds exceeding 20 km/h. Truck is meant a vehicle that operates very locally and rarely travels more than 500 meter between loading and offloading operations.

### BRIEF DESCRIPTIONS OF THE DRAWINGS

The above objects, as well as additional objects, features and advantages of the present invention, will be more fully appreciated by reference to the following illustrative and non-limiting detailed description of examples of the present invention, when taken in conjunction with the accompanying drawings.
Figure 1 shows an industrial truck according to the disclosure.
Figure 2 shows the same industrial truck as in figure 1 from the side.
Figure 3 shows the same industrial truck as in figure 1 and 2 above.
Figure 4 shows the same industrial truck as in figures 1-3.

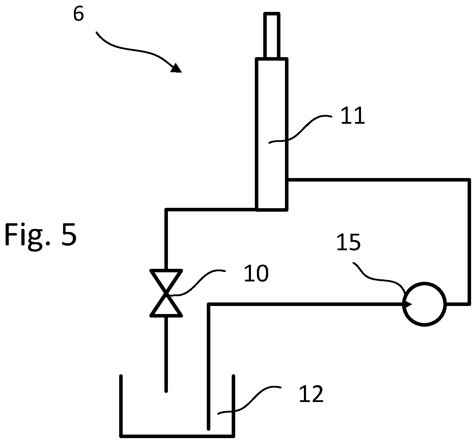

Figure 5 discloses a simplified scheme of the hydraulic system of the industrial truck according to the figures 1-4.
Figure 6 discloses a flowchart of the method according to the disclosure.

### DETAILED DESCRIPTION

The present invention will now be described with reference to the accompanying drawings, in which preferred examples of the invention are shown. The invention may, however, be in other forms and should not be construed as limited to the herein disclosed examples. The disclosed examples are provided to fully convey the scope of the invention to the skilled person.

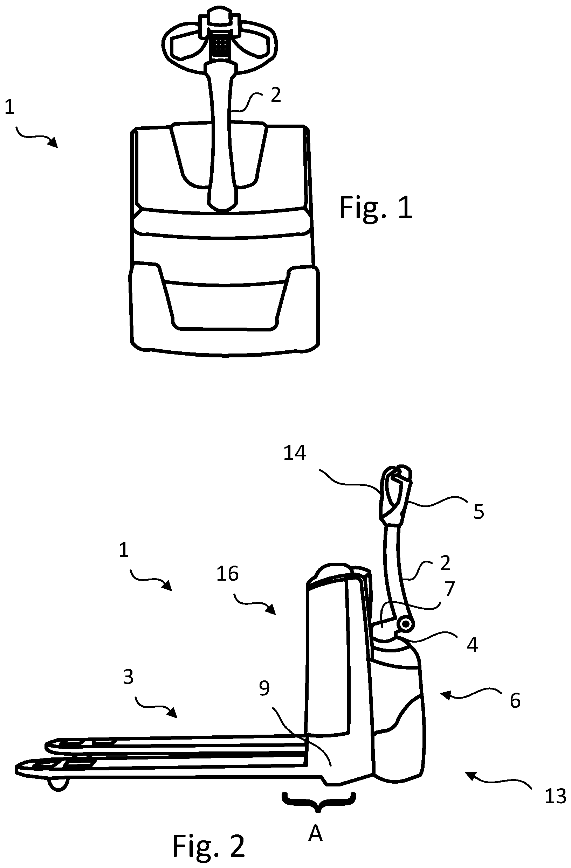

Figure 1 shows an industrial truck 1 with a tiller arm 2. The particular industrial truck is a low lifter floor conveyor intended for order picking. However, it should be understood that for the present disclosure any industrial truck having a tiller that allows an operator to walk with the industrial truck is functional with the present disclosure.

Figure 2 shows a first aspect of the disclosure with the industrial truck 1 of figure 1 seen from the side. The industrial truck 1 has a load carrier 3, in the form of a pair of forks. However, the load carrier can be of any type such as a claw gripping mechanism or a flatbed that can be raised etc. Further there are disclosed a vertical axis 7 for the tiller arm 2 around which it is rotatable. The load carrier may be arranged to only lift a load of the surface for low lift transport, or it may be arranged for example on a mast that allows for higher lift heights.

According to the disclosure, a horizontal angle sensor 4 is provided for the vertical axis 7 of the tiller arm 2. The angle sensor 4 can be of any type such as a potentiometric analog sensor, or a digital sensor using hall elements and a magnet or any other type of sensors. The angle sensor 4 can thus detect the position of the tiller arm 2 in a horizontal plane, and output the position to the truck computer 5. The communication to the truck computer is made either by wire or by wireless communication. The communication can also be to a local control unit that evaluates the signals from the sensor. This in turn then communicating with a control unit that can control the drive motor and the speed of the industrial truck. It is preferred that the angle sensor 4 is positioned close to an axle that is concentric with the axis 7. However, it is also thinkable, for example, that the angle sensor need not detect at the axis 7 but could be positioned in the handle 14 of the tiller arm 2 and be detecting by means of accelerometers or gyros, which position the tiller arm 2 has. The accelerometers and/or gyros can thus be positioned very close to a control unit 5 that is positioned in a handle 14 of the industrial truck 1.

The tiller arm 2 is used for controlling the industrial truck by rotating it around the vertical axis 7. A direct mechanical link is often applied to between the rotating elements of the tiller arm 2 and a steerable wheel under the industrial truck 1. However, this is only an option, there can also be a servo steering assembly applied where the tiller arm 2 is not mechanically coupled to the steered wheel. The invention in this case is not limited to detecting the angle position for the tiller arm. If no direct coupling is used between the tiller arm and the steered wheel, there can be an angle sensor applied in relation to the steered wheel and/or in relation to the tiller arm 2.

The industrial truck has a control unit 5. The control unit 5 is a main control unit of the industrial truck that can control motors of the industrial truck and the functions of the industrial truck. The control unit 5 is programmable and can store upgradable software. The control unit can also control the motor control unit that controls a travel motor and a pump motor.

The travel motor is in general acting on one wheel of the industrial truck. The travel motor is often an AC motor but could be a DC motor. The travel motor is attached through a gearbox to a steerable wheel, which is steered by the tiller arm. This arrangement is the most preferred however; it is of course possible to have another wheel that is steerable and the travel motor acting on another wheel.

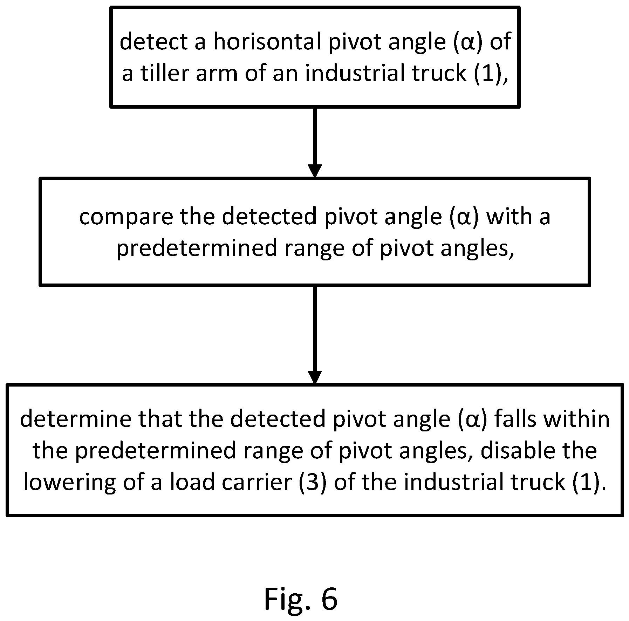

The industrial truck 1 has a hydraulic system 6, see figure 6. The hydraulic system 6 comprises a hydraulic tank 12 and a hydraulic pump. Further, there are the normal elements of a hydraulic system present such as pipes and hydraulic fluid. The hydraulic system further comprises a hydraulic cylinder 11 and a return valve 10. If the return valve 10 is open, the hydraulic system 6 will release fluid from the hydraulic cylinder 11. The hydraulic cylinder 11 operates on the load carrier 3 for lifting a load. Thus, the return valve 10, if opened, will induce that the load carrier 3 is lowered when the hydraulic fluid leaves the lift cylinder 11 and returns to the hydraulic tank 12. If the valve 10 is locked, the load carrier 3 cannot move down. An upward movement is not prevented though, however such a blocking can be achieved if desired for example by controlling the hydraulic pump 15 not to be operable.

The return valve 10 is electrically operated. Thus, it can be controlled and locked by means of controlling it through electric input. For example, if the valve 10 is short-circuited the valve will not move and is locked.

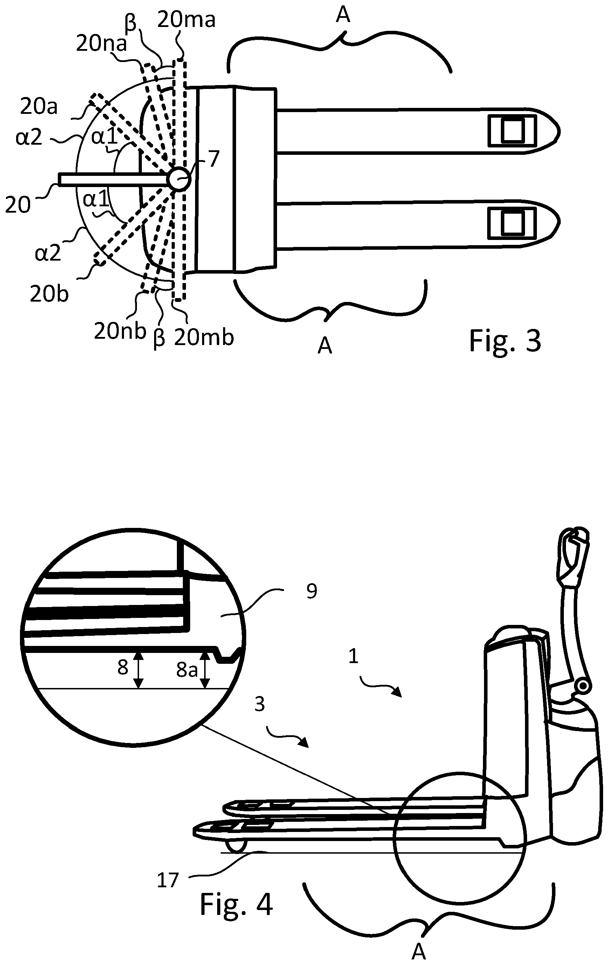

Figure 3 discloses the present disclosure and different exemplified angle positions 20, 20a, 20b, 20ma, 20mb, 20na, 20nb for the tiller arm 2. The angle of the different positions is termed α, α1, α1, α2, α2, β and β. By definition when α is 0 ° the tiller arm 2 is in the longitudinal direction of the industrial truck and the direction of travel is straight ahead, i.e. angle position 20. Then there is a maximal angle clockwise and anti-clockwise for the tiller arm 2, i.e. when the tiller arm2 is in position 20ma or 20mb. Also, figure 3 disclose a middle angle position 20a, 20b being around 45 °. The endpoints 20ma and 20mb respectively has a respective angle α2. According the disclosure the valve 10 is locked in position for all angles including and above α1. In doing so, the load carrier cannot be lowered if the tiller arm has an angle falling within the range of αf1 to α2. Thus, a first predetermined range when lowering is disables is defined when α is in the range of α1 to α2. In arranging the industrial truck in this way, the section A as marked in fig.3 cannot be lowered onto the operator's feet. The section A should not be construed as only being the specific measure shown in the drawing it extends all along the load carrier and also along the section 9 of the housing 13 of the industrial truck 1 that is moving up and down with the load carrier 3. This is further illustrated by the different distances 8 and 8a in figure 4. Distance 8 is the distance of the underside of the load carrier 3 to the floor. Distance 8a is the distance between the moving sections 9 of the housing 16, to the floor.

It should be understood that the industrial truck 1 could be arranged such that lowering of the load carrier 3 is not disabled for distances 8 or 8a to the floor 17, when these are above a certain predetermined value, see figure 4. For example, the industrial truck 1 could be allowed to allow lowering in situations where distance 8 and/or 8a is above 10 cm. This would thus help the operator when operating the industrial truck 1 and not block the operations of the industrial truck 1 when not needed. In order to determine the distance various way forward is open. There could be attached a simple sensor that can detect distances from the underside of the load carrier and/or the housing to the floor. Or a simple sensor arrangement can be configured at the hydraulic cylinder 11 such that the extension of the hydraulic cylinder can be correlated with the distances 8 and 8a. Or it is also possible to determine the time the last lifting operation, i.e. lowering or lifting was performed in relation to an end stop of the lifting operation, and correlate this to the distance between the load carrier 3 or the housing 9 to the floor. A very elegant way as no sensor will be needed.

Further, the industrial truck 1 as seen in figure 3, can be arranged such that also lifting is prevented. This operation is preferred to be made possible by arranging the control unit 5 such that it can disable lifting through blocking the hydraulic pump 15 from operation. Other ways of disabling the lifting operation can be achieved for example by blocking in closed position of a non disclosed valve in the suction side of the hydraulic pump 15, or by mechanically preventing the hydraulic cylinder from extending. A second predetermined range of horizontal pivot angles β to α2, defines when the lifting is blocked could be the same range as for the prevention of lowering. However, in a preferred way the lifting can be blocked in a smaller range of angles near the maximal pivot angle α2 of the tiller arm 2. This range could for example be 45 ° and up to the maximal angle α2, but it could also be 30 °to α2, or also 15 ° to α2. It should be understood that the second predetermined range of angles need not be fully or partly comprised in the first predetermined range of horizontal pivot angles. For example lifting can be disabled at an angle that is lower than α1, which is an endpoint for the first predetermined range of horizontal pivot angles. However, for higher angles, i.e. α1 and higher lowering, should be disabled with or without disabling of lifting in order to achieve the object to the disclosure.

Thus, the function of the disclosure can be described as the following. An operator lifts a load with the load carrier 3 and then in ongoing operation turns the tiller arm 2 to an angle including α1. The angle detector 4 detects this turning and communicates the angle value to the control unit 5. The control unit 5 is programmed to block valve 10 in the hydraulic system 6. The operator that now can step in the area A can no longer lower the load carrier 2 as the control unit has blocked the lowering function of the industrial truck 1. Thus the load carrier or the vertically moving house 9 of the industrial truck 1, or even a load that is loaded onto the load carrier 2, as long as the tiller arm 2 is in the first angle range from α1 to α2, cannot squeeze the feet of the operator.

It should be understood that the first range in which the lowering of the hydraulic system is blocked could be arranged with different angles depending on the type of industrial truck that is at hand. From a general point of view the range in which blocking should occur of lowering is 45 ° to the maximal angle of the tiller arm 2 in each direction. It can be also from 60 ° to maximal angle, or 80 ° to the maximal angle or 10 ° from and then up to the maximal angle. The maximal angle is normally set to 90 °but can be 95 ° or 100 ° or lower than 90 °.'

The present disclosure is also related to a method as disclosed in figure 6. The following steps are included in the method.
- detect a horizontal pivot angle α of a tiller arm of the industrial truck 1.

By detecting the horizontal pivot angle α the area outside the sides of an industrial truck that a tiller arm can be moved into, may be made safer when operated with the tiller arm at higher values of α.

In a further step the detected horizontal pivot angle α is compared with a first predetermined range of pivot angles. By comparing the horizontal pivot angle α with a first predetermined range, action can be taken when the tiller arm 2 operated at higher pivot angles, i.e. above α1 such as α1-.α2.

In a yet further step it is determined that if the detected pivot angle α falls within the first predetermined range of horizontal pivot angles, the lowering of a load carrier 3 of the industrial truck 1 is disabled of the industrial truck 1.

It is also possible to add further steps to the method,
- determine that the detected pivot angle β falls within a second predetermined range β-α2 of horizontal pivot angles,
- disable lifting of the load carrier 3 if the detected pivot angle β falls within the second predetermined range of horizontal pivot angles

Thus, the same angle sensor 4 can be used as input for a second predetermined range of horizontal pivot angles β, and also the lifting operation can be disabled.

The method can further comprise the steps of
- detect the distance 8; 8a between the load carrier or housing of the truck to the floor,
- override the step of disabling of lowering of the load carrier 3 if the detected distance 8; 8a is over a predetermined value.

This will allow for that the operator is not prevented from lowering when there is no need to prevent the lowering.

The person skilled in the art realizes that the present invention is not limited to the preferred disclosure as described above. The person skilled in the art further realizes that modifications and variations are possible within the scope of the appended claims. In addition, the blocking of the hydraulic system can be made in full such that lifting is also blocked, by additionally blocking the pump 15 of the hydraulic system 6. Additionally, the whole industrial truck can be locked if the angle of the tiller arm is above a certain pivot angle range i.e. for example smaller range than α1-α2 etc.

## Claims

1. An industrial truck (1) comprising, a tiller arm (2) for maneuvering the industrial truck (1), a load carrier (3), an horizontal pivot angle sensor (4), a control unit (5), an hydraulic system (6) for operating the load carrier (3), wherein the control unit (5) operable to control functions of the industrial truck including travel and lifting function, wherein the angle sensor (4) is operable to detect the horizontal pivot angle (α) of the tiller arm (2) around a vertical axis (7), wherein the load carrier (3) is operable to be maneuvered to an elevated position, wherein
the industrial truck (1) is arranged such that the angle sensor (4) can send detected pivot angle (α) values to the control unit (5), wherein the industrial truck (1) is arranged such that control unit (5) is operable to communicate with and control the hydraulic system (6) of the industrial truck (1), **characterised in that**,
the control unit (5) is arranged such that when the pivot angle (α) of the tiller arm (5) is determined by the sensor (4) to be within a first predetermined range of pivot angles (α1-α2), the control unit (5) controls the hydraulic system such that lowering of load carrier (3) is disabled.

2. The industrial truck (1) according to claim 1, wherein the first predetermined range (α1-α2) for the pivot angle is 45 ° to the maximal pivot angle on both sides of the 0 ° pivot angle (α), preferably the maximal pivot angle (α) is 100°, even more preferred 95 ° or even more preferred 90 °.

3. The industrial truck (1) according to claim 1, wherein the first predetermined range for disabling the lowering of the load carrier is 60 to 90 ° on both sides from 0 ° pivot angle (α).

4. The industrial truck according to any of the claims above wherein the control of the hydraulic system to disable lowering of the load carrier (3), is made through blocking of a valve (10) comprised between a hydraulic lifting cylinder (11) and a hydraulic tank (12).

5. The industrial truck (1) according to any of the claims above, wherein the industrial truck (1) has a housing /(16) that is movable in the vertical direction with the load carrier (3), or there is a section (9) of the housing that is movable in the vertical direction.

6. The industrial truck (1) according to any of the claims above, wherein the industrial truck (1) is arranged such that the complete operation of the hydraulic system is disabled in a second predetermined range for horizontal pivot angles (β-α2) of the tiller arm (2), this is preferably arranged by arranging the control unit (5) such that it can block the operation of the hydraulic pump (15) of the hydraulic system (6).

7. The industrial truck (1) according to claim 6, wherein the second predetermined range of horizontal pivot angles (β-α2) is a range comprised within the first predetermined range of horizontal pivot angles (α1-α2) in which lowering is disabled.

8. The industrial truck (1) according to any of the claims above, wherein the industrial truck comprises a horizontal angle detector (4) positioned in the handle (14) of the tiller arm (2), preferably said angle detector comprises an accelerometer or a gyro.

9. The industrial truck (1) according to any of the claims above, wherein the industrial truck (1) is arranged such that lowering of the load carrier (3) is prevented at a predetermined distance (8; 8a) from the floor (17) on which the industrial truck (1) is operable, preferably the industrial truck (1) is arranged such that lowering is allowed for above the predetermined distance (8; 8a) from the floor (17).

10. A method for operating an industrial truck (1) comprising the steps of:
- detect a horizontal pivot angle (α) of a tiller arm of the industrial truck (1),
- compare the detected pivot angle (α) with a first predetermined range of pivot angles (α1-α2),
- determine that the detected pivot angle (α) falls within the first predetermined range (α1-α2) of horizontal pivot
,and **characterised in that**,
if the detected pivot angle (α) falls within the first predetermined range (α1-α2), disable the lowering of a load carrier (3) of the industrial truck (1).

11. The method according to claim 10, wherein further comprised is the steps that involves:
- determine that the detected pivot angle (β) falls within a second predetermined range (β-α2) of horizontal pivot angles,
- disable lifting of the load carrier (3) if the detected pivot angle (β) falls within the second predetermined range of horizontal pivot angles.

12. The method according to claim 10 or 11, wherein further is comprised the steps of:
- detect the distance (7; 8) between the load carrier or housing of the industrial truck to the floor,
- override the step of disabling of lowering of the load carrier (3) if the detected distance (7; 8) is over a predetermined value.

13. A computer software, that when it is stored on a control unit (5) of the industrial truck (1) any of the claims 1-9, performs the method according to any of the claims 10-12.

14. A computer program product comprising the computer software of claim 13 stored on a computer readable medium.

## Patentansprüche

1. Flurförderzeug (1) umfassend eine Deichsel (2) zum Manövrieren des Flurförderzeugs (1), einen Lastträger (3), einen horizontalen Drehwinkelsensor (4), eine Steuereinheit (5), ein hydraulisches System (6) zum Bedienen des Lastträgers (3), wobei die Steuereinheit (5), die zum Steuern von Funktionen des Flurförderzeugs bedient werden kann, eine Bewegungs- und Hebefunktion umfasst, wobei der Winkelsensor (4) zum Detektieren des horizontalen Drehwinkels (α) der Deichsel (2) um eine vertikale Achse (7) bedient werden kann, wobei der Lastträger (3) bedient werden kann, um in eine erhöhte Position manövriert zu werden, wobei das Flurförderzeug (1) so eingerichtet ist, dass der Winkelsensor (4) detektierte Drehwinkel (α) -Werte an die Steuereinheit (5) übertragen kann, wobei das Flurförderzeug (1) so eingerichtet ist, dass die Steuereinheit (5) zum Kommunizieren mit und zum Steuern von dem hydraulischen System (6) des Flurförderzeugs (1) bedient werden kann, **dadurch gekennzeichnet, dass** die Steuereinheit (5) so eingerichtet ist, dass wenn der Sensor (4) ermittelt, dass der Drehwinkel (α) der Deichsel (5) in einem ersten vorgegebenen Bereich von Drehwinkeln (α1-α2) ist, steuert die Steuereinheit (5) das hydraulische System so, dass eine Absenkung des Lastträgers (3) unterbunden wird.

2. Flurförderzeug (1) nach Anspruch 1, wobei der erste vorgegebene Bereich (α1-α2) für den Drehwinkel 45° zum maximalen Drehwinkel auf beiden Seiten des 0°-Drehwinkels (α) ist, vorzugsweise ist der maximale Drehwinkel (α) 100°, noch bevorzugter 95° oder noch bevorzugter 90°.

3. Flurförderzeug (1) nach Anspruch 1, wobei der erste vorgegebene Bereich zum Unterbinden der Absenkung des Lastträgers 60 bis 90° auf beiden Seiten vom 0°-Drehwinkel (α) ist.

4. Flurförderzeug nach einem der vorgehenden Ansprüche, wobei das Steuern des hydraulischen Systems zum Unterbinden der Absenkung des Lastträgers (3) durch Absperren eines Ventils (10) zwischen einem hydraulischen Hebezylinder (11) und einem hydraulischen Behälter (12) bereitgestellt wird.

5. Flurförderzeug (1) nach einem der vorgehenden Ansprüche, wobei das Flurförderzeug (1) ein Gehäuse (16) aufweist, das in der vertikalen Richtung mit dem Lastträger (3) bewegbar ist, oder ein Abschnitt (9) des Gehäuses in der vertikalen Richtung bewegbar ist.

6. Flurförderzeug (1) nach einem der vorgehenden Ansprüche, wobei das Flurförderzeug (1) so eingerichtet ist, dass die ganze Bedienung des hydraulischen Systems in einem zweiten vorgegebenen Bereich für horizontale Drehwinkel (β-α2) der Deichsel (2) deaktiviert wird, dies wird vorzugsweise dadurch angeordnet, dass die Steuereinheit (5) so eingerichtet wird, dass sie die Bedienung der hydraulischen Pumpe (15) des hydraulischen Systems (6) Absperren kann.

7. Flurförderzeug (1) nach Anspruch 6, wobei der zweite vorgegebene Bereich von horizontalen Drehwinkeln (β-α2) ein Bereich im ersten vorgegebenen Bereich von horizontalen Drehwinkeln (α1-α2) ist, worin eine Absenkung unterbunden ist.

8. Flurförderzeug (1) nach einem der vorgehenden Ansprüche, wobei das Flurförderzeug einen horizontalen Winkeldetektor (4) umfasst, der im Griff (14) der Deichsel (2) positioniert ist, vorzugsweise umfasst der Winkeldetektor einen Beschleunigungsmesser oder einen Kreisel.

9. Flurförderzeug (1) nach einem der vorgehenden Ansprüche, wobei das Flurförderzeug (1) so eingerichtet ist, dass eine Absenkung des Lastträgers (3) in einem vorgegebenen Abstand (8; 8a) vom Boden (17), worauf das Flurförderzeug (1) bedienbar ist, verhindert wird, vorzugsweise ist das Flurförderzeug (1) so eingerichtet, dass eine Absenkung oberhalb des vorgegebenen Abstands (8; 8a) vom Boden (17) möglich ist.

10. Verfahren zum Bedienen eines Flurförderzeugs (1) umfassend die folgenden Schritte:
- Detektieren eines horizontalen Drehwinkels (α) einer Deichsel des Flurförderzeugs (1),
- Vergleichen des detektierten Drehwinkels (α) mit einem ersten vorgegebenen Bereich von Drehwinkeln (α1-α2),
- Ermitteln, dass der detektierte Drehwinkel (α) innerhalb des ersten vorgegebenen Bereichs (α1-α2) einer horizontalen Drehung fällt, und **dadurch gekennzeichnet, dass**, wenn der detektierte Drehwinkel (α) innerhalb des ersten vorgegebenen Bereichs (α1-α2) fällt, wird die Absenkung eines Lastträgers (3) des Flurförderzeugs (1) unterbunden.

11. Verfahren nach Anspruch 10, wobei die folgenden Schritte weiter enthalten sind:
- Ermitteln, dass der detektierte Drehwinkel (β) innerhalb eines zweiten vorgegebenen Bereichs (β-α2) von horizontalen Drehwinkeln fällt,
- Unterbinden einer Hebung des Lastträgers (3), wenn der detektierte Drehwinkel (β) innerhalb des zweiten vorgegebenen Bereichs von horizontalen Drehwinkeln fällt.

12. Verfahren nach Anspruch 10 oder 11, wobei die folgenden Schritte weiter enthalten sind:
- Detektieren des Abstands (7; 8) zwischen dem Lastträger oder dem Gehäuse des Flurförderzeugs und dem Boden,
- Überspringen des Schritts zum Unterbinden einer Absenkung des Lastträgers (3), wenn der detektierte Abstand (7; 8) oberhalb eines vorgegebenen Werts ist.

13. Computersoftware, die, wenn sie in einer Steuereinheit (5) des Flurförderzeugs (1) nach einem der Ansprüche 1-9 gespeichert ist, das Verfahren nach einem der Ansprüche 10-12 durchführt.

14. Computerprogrammprodukt, umfassend die Computersoftware nach Anspruch 13, die auf einem computerlesbaren Medium gespeichert ist.

## Revendications

1. Chariot de manutention (1) comprenant un timon (2) pour manœuvrer le chariot de manutention (1), un porte-charge (3), un capteur d'angle de pivotement horizontal (4), une unité de commande (5), un système hydraulique (6) pour faire fonctionner le porte-charge (3), dans lequel l'unité de commande (5) peut fonctionner pour commander les fonctions du chariot de manutention, y compris la fonction de déplacement et de levage, dans lequel le capteur d'angle (4) peut fonctionner pour détecter l'angle de pivotement horizontal (α) du timon (2) autour d'un axe vertical (7), dans lequel le porte-charge (3) peut être actionné pour être manœuvré vers une position élevée, dans lequel le chariot de manutention (1) est agencé de sorte que le capteur d'angle (4) peut envoyer des valeurs d'angle de pivotement (α) détectées à l'unité de commande (5), dans lequel le chariot de manutention (1) est agencé de sorte que l'unité de commande (5) peut fonctionner pour communiquer avec et commander le système hydraulique (6) du chariot de manutention (1), **caractérisé en ce que** l'unité de commande (5) est agencée de telle sorte que lorsque l'angle de pivotement (α) du timon (5) est déterminé par le capteur (4) comme étant dans une première plage prédéterminée d'angles de pivotement (α1-α2), l'unité de commande (5) commande le système hydraulique de sorte que l'abaissement du porte-charge (3) est désactivé.

2. Chariot de manutention (1) selon la revendication 1, dans lequel la première plage prédéterminée (α1-α2) pour l'angle de pivotement est 45° par rapport à l'angle de pivotement maximal des deux côtés de l'angle de pivotement de 0° (α), de préférence l'angle de pivotement maximal (α) est 100°, encore plus préféré 95° ou encore plus préféré 90°.

3. Chariot de manutention (1) selon la revendication 1, dans lequel la première plage prédéterminée pour désactiver l'abaissement du porte-charge est de 60 à 90° des deux côtés à partir de l'angle de pivotement de 0° (α).

4. Chariot de manutention selon l'une quelconque des revendications précédentes, dans lequel la commande du système hydraulique pour désactiver l'abaissement du porte-charge (3) est réalisée par le blocage d'une soupape (10) comprise entre un cylindre de levage hydraulique (11) et un réservoir hydraulique (12).

5. Chariot de manutention (1) selon l'une quelconque des revendications précédentes, dans lequel le chariot de manutention (1) comporte un boîtier (16) qui est mobile dans la direction verticale avec le porte-charge (3), ou il y a une section (9) du boîtier qui est mobile dans la direction verticale.

6. Chariot de manutention (1) selon l'une quelconque des revendications précédentes, dans lequel le chariot de manutention (1) est agencé si bien que le fonctionnement complet du système hydraulique est désactivé dans une deuxième plage prédéterminée pour les angles de pivotement horizontaux (β-α2) du timon (2), ceci est de préférence agencé par l'agencement de l'unité de commande (5) si bien qu'il peut bloquer le fonctionnement de la pompe hydraulique (15) du système hydraulique (6).

7. Chariot de manutention (1) selon la revendication 6, dans lequel la deuxième plage prédéterminée d'angles de pivotement horizontaux (β-α2) est une plage comprise dans la première plage prédéterminée d'angles de pivotement horizontaux (α1-α2) dans laquelle l'abaissement est désactivé.

8. Chariot de manutention (1) selon l'une quelconque des revendications précédentes, dans lequel le chariot de manutention comprend un détecteur d'angle horizontal (4) positionné dans la poignée (14) du timon (2), de préférence ledit détecteur d'angle comprend un accéléromètre ou un gyroscope.

9. Chariot de manutention (1) selon l'une quelconque des revendications précédentes, dans lequel le chariot de manutention (1) est agencé si bien que l'abaissement du porte-charge (3) est empêché à une distance prédéterminée (8; 8a) depuis le sol (17) sur lequel le chariot de manutention (1) peut être actionné, de préférence le chariot de manutention (1) est agencé si bien qu'un abaissement est autorisé au-delà de la distance prédéterminée (8; 8a) depuis le sol (17).

10. Procédé de fonctionnement d'un chariot de manutention (1) comprenant les étapes consistant à :
- détecter un angle de pivotement horizontal (α) d'un timon du chariot de manutention (1),
- comparer l'angle de pivotement détecté (α) avec une première plage prédéterminée d'angles de pivotement (α1-α2),
- déterminer que l'angle de pivotement détecté (α) tombe dans la première plage prédéterminée (α1-α2) de pivotement horizontal, et **caractérisé en ce que,** si l'angle de pivotement détecté (α) tombe dans la première plage prédéterminée (α1-α2), l'abaissement d'un porte-charge (3) du chariot de manutention (1) est désactivé.

11. Procédé selon la revendication 10, dans lequel le procédé comprend en outre les étapes consistant à :
- déterminer que l'angle de pivotement détecté (β) tombe dans une deuxième plage prédéterminée d'angles de pivotement horizontaux (β-α2),
- désactiver le levage du porte-charge (3) si l'angle de pivotement détecté (β) tombe dans la deuxième plage prédéterminée d'angles de pivotement horizontaux.

12. Procédé selon la revendication 10 ou 11, dans lequel le procédé comprend en outre les étapes consistant à :
- détecter la distance (7; 8) entre le porte-charge ou le boîtier du chariot de manutention jusqu'au sol,
- négliger l'étape de désactivation de l'abaissement du porte-charge (3) si la distance détectée (7; 8) est supérieure à une valeur prédéterminée.

13. Logiciel informatique qui, lorsqu'il est stocké sur une unité de commande (5) du chariot de manutention (1) selon l'une quelconque des revendications 1 à 9, exécute le procédé selon l'une quelconque des revendications 10 à 12.

14. Produit de programme informatique comprenant le logiciel informatique de la revendication 13 stocké sur un support lisible par ordinateur.
